(19) Europäisches Patentamt / European Patent Office / Office européen des brevets

(11) **EP 4 736 615 A1**

(12) **EUROPEAN PATENT APPLICATION**

(43) Date of publication:
06.05.2026 Bulletin 2026/19

(21) Application number: 25179330.3

(22) Date of filing: 28.05.2025

(51) International Patent Classification (IPC):
*A01C 7/08* (2006.01)    *A01C 7/16* (2006.01)
*A01C 15/04* (2006.01)    *A01C 7/10* (2006.01)

(52) Cooperative Patent Classification (CPC):
**A01C 15/04; A01C 7/081; A01C 7/16;** A01C 7/102

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.11.2024 US 202463715831 P**

(71) Applicant: **Agco Corporation
Duluth, Georgia 30096 (US)**

(72) Inventor: **SNYDER, Todd Brandon
Jackson, 56143 (US)**

(74) Representative: **AGCO Intellectual Property
Department
AGCO Limited
Abbey Park Stoneleigh
Kenilworth CV8 2TQ (GB)**

(54) **SOLID MATERIAL APPLICATION SYSTEM AND RELATED APPLICATION MACHINE AND METHOD**

(57) A solid material application system (104) includes a solid material tank (112), a plurality of metering screws (214) below the solid material tank and a blower (202) in fluid communication with a plurality of flow lines (114). Each metering screw is contained in a housing (208) having a solid inlet (210a-c) connected to the solid material tank and a solid outlet (212a-c) axially offset from the solid inlet. Each flow line is connected to the solid outlet of one of the housings of one of the metering screws. Each metering screw is configured to rotate such that solid material falling through the solid inlet from the tank into the housing is transferred axially along the metering screw to the solid outlet. The blower is configured to entrain the solid material in air in each of the plurality of flow lines. Related application machine and method are also disclosed.

FIG. 2

# Description

## CROSS-REFERENCE TO RELATED APPLICATIONS

n/a

## FIELD

The present disclosure relates generally to transfer of solid material, more particularly to the metering of solid material to distribution lines, such as solid fertilizer to be spread onto an agricultural field using a dry-particulate spreader.

## BACKGROUND

Agricultural particulate delivery machines include row crop planters, grain drills, fertilizer spreaders, etc. Row crop planters include multiple row planting units (or simply "row units") attached to a toolbar and towed behind a tractor. Each of the row units is responsible for opening a furrow, dispensing seeds into the furrow, and closing the furrow after the seeds are placed. By way of example, the seed furrows may be opened by a first pair of disks extending downwardly from the row unit at its leading end, closed by a second pair of disks extending downwardly from the row unit at its trailing end, and then tamped or packed down by a trailing wheel that follows both pairs of disks. Row crop planters and other types of planters may include mechanisms for placing fertilizer pellets or other particulate material in or on the ground along with the seeds.

Fertilizer spreaders typically have a solid material hopper and an air flow system to deliver particulate material from the hopper to the field. For example, a fertilizer spreader may include a series of elongate tubes extending from the hopper chamber to a product applicator (e.g., a strike plate) that directs the material toward the ground. Such pneumatic agricultural product delivery systems are commonly employed in planters, air drills, fertilizer and pesticide applicators, and a variety of other agricultural implements.

Many conventional machines that that apply solid materials meter those products using metering wheels. For example, solid materials may be metered as described in Canadian Patent 2,291,321, "Apparatus and Method for Dispensing Particles," granted February 13, 2007. As the metering wheels turn, they dispense or drop dry product out, where the material is entrained into an air stream. Such metering wheels can generally dispense enough product to supply a whole boom of a fertilizer spreader or multiple hoses of an air distribution system. Metering wheels have some disadvantages, such as difficulty in providing variable solid flow rates, and tendency to become gummed up in high-moisture situations. The flow rate of solid material is typically determined by the diameter of the metering wheels as well as the rotational speed of the metering wheels.

## BRIEF SUMMARY

In some embodiments, a solid material application system includes a solid material tank, a plurality of metering screws below the solid material tank, a plurality of flow lines, and a blower in fluid communication with each of the flow lines. Each metering screw is contained in a housing having a sidewall around an axis of rotation of the metering screw. The housing has a solid inlet connected to the solid material tank through the sidewall and a solid outlet through the sidewall and axially offset from the solid inlet. Each flow line is connected to the solid outlet of the housing containing one of the metering screws.

Each metering screw is configured to rotate such that solid material falling through the solid inlet from the solid material tank into the housing is transferred axially along the metering screw to the solid outlet. The blower is configured to entrain the solid material in air in each of the plurality of flow lines.

The application system may optionally include a motor configured to rotate the metering screw. Such a motor may be configured to rotate the metering screw at a variable rate.

The application system may have a slide gate configured to control a size of the solid inlet.

The housing may include an end cap at one end of each metering screw. Thus, the metering screw may be removable from the housing when the end cap is removed.

The solid inlet may be composed of a plurality of solid inlets on an individual flow line. In such embodiments, the solid outlet may be composed of a plurality of solid outlets on the individual flow line, and each solid outlet is axially offset from a corresponding solid inlet. Each metering screw may be configured to rotate such that solid material falling through each solid inlet from the solid material tank into the housing is transferred axially along the metering screw to the corresponding solid outlet.

The blower may optionally be in fluid communication with the solid material tank. Thus, the blower may pressurize air in the solid material tank.

Each metering screw may exhibit a diameter, and may have threads exhibiting a thread depth of less than 40% of the diameter, such as less than 30% of the diameter, or even less than 20% of the diameter.

An application machine includes a chassis supported by ground-engaging elements and the application system carried by the chassis. In the application machine, each of the flow lines may terminate at a different transverse position relative to a centerline of the chassis.

A method of applying a solid material includes providing air from a blower through at least some of a plurality of flow lines, rotating at least some of a plurality of metering screws within at least one housing having a sidewall around an axis of rotation of the metering screw to deliver solid material from a solid material tank to at least some of the plurality of flow lines, and entraining the solid material in the air in at least some of the plurality of flow lines. The at least one housing has a solid inlet connected to the solid material tank through the sidewall and a solid outlet through the sidewall and axially offset from the solid inlet and connected to at least one of the flow lines.

Air may also be provided from the blower to a solid material tank.

Rotating at least some of the metering screws may cause the solid material to be transferred axially along the metering screw from the solid inlet to the solid outlet. The rotational speed of each of the metering screws may be individually adjusted to control an individual flow rate of the solid material to each corresponding flow line.

Within the scope of this application, it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

## BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:

FIG. 1 is a simplified top view of a dry-particulate spreader having an application system;
FIG. 2 is a simplified side view illustrating a portion of the application system of the spreader shown in FIG. 1;
FIG. 3 is a simplified side view illustrating the portion of the application system with a slide gate in a different position from that shown in FIG. 2; and
FIG. 4 is a simplified flow chart illustrating a method of applying a solid material.

## DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" to avoid any implication that other, compatible materials, structures, features, and methods usable in combination therewith should or must be excluded.

As used herein, the term "configured" refers to a size, shape, material composition, and arrangement of one or more structure and/or apparatus facilitating operation thereof in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

The terms "longitudinal" and "transverse" are made in relation to a machine's normal direction of travel. In other words, the term "longitudinal" equates to the fore-and-aft direction, whereas the term "transverse" equates to the crosswise direction, or left and right. Furthermore, the term "axial" is used in relation to a rotating body such as a shaft, wherein axial relates to a direction along the rotation axis (as opposed to "radial," which is a direction perpendicular to the rotation axis).

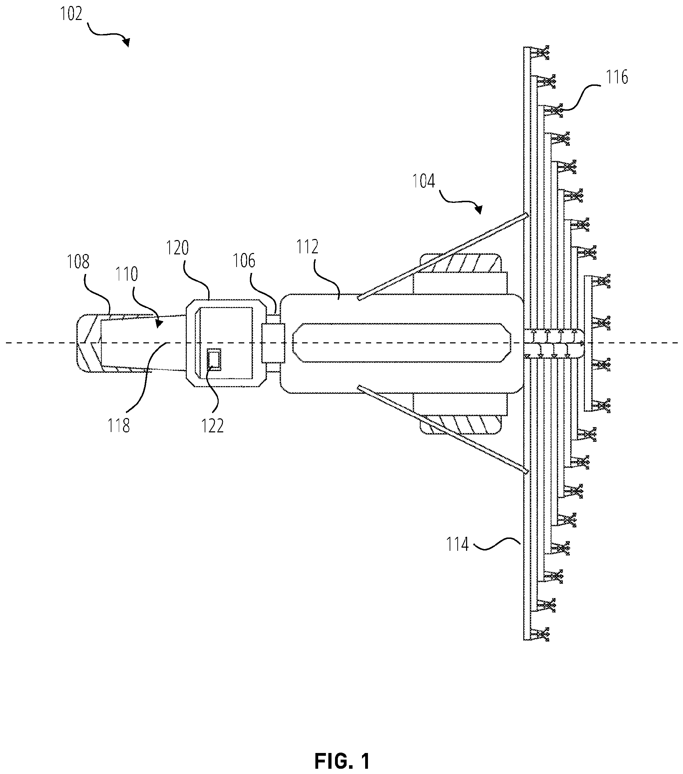

FIG. 1 is a simplified top view of an application machine 102 in the form of a solid material spreader. The application machine 102 carries an application system 104 and may be used, for example, to distribute fertilizer on an agricultural field. The application machine 102 may be used for other purposes, such as to spread seed in a field, to spread salt on a roadway, etc. The application machine 102 has a chassis 106 supported by ground-engaging elements 108, shown as wheels in FIG. 1. The application machine 102 is shown with three wheels having wide profiles to distribute weight of the application machine 102 over a large area and limit the pressure acting on the ground. Other application machines may have four wheels, or any number of wheels. In some application machines, the ground-engaging elements 108 may include endless tracks or other devices instead of or in addition to wheels. The application machine 102 is driven by an engine 110, which may be mounted at the front, rear, or center of the chassis 106.

The application system 104 includes at least one solid material tank 112 carried by the chassis 106 and designed to contain material for distribution. A plurality of flow lines 114 connect the solid material tank 112 to dispensers 116. Each of the flow lines 114 terminates at a corresponding dispenser 116 that is located at a different transverse position relative to a longitudinal centerline 118 of the chassis 106. Thus, as the application machine 102 travels through a field or other area to be treated, the dispensers 116 may spread the solid material across a width spanned by the dispensers 116.

In some embodiments, the dispenser 116 may include a strike plate to direct the air and solid material downward toward the ground. In other embodiments, the dispenser 116 may be a row unit or a part of a row unit, such as a planter row unit.

The application machine 102 may include a controller 122 for controlling one or more operational parameters. For example, the controller 122 may be a mobile device such as a tablet computer, a terminal built-in to the application machine 102 in the operator cab 120, etc.

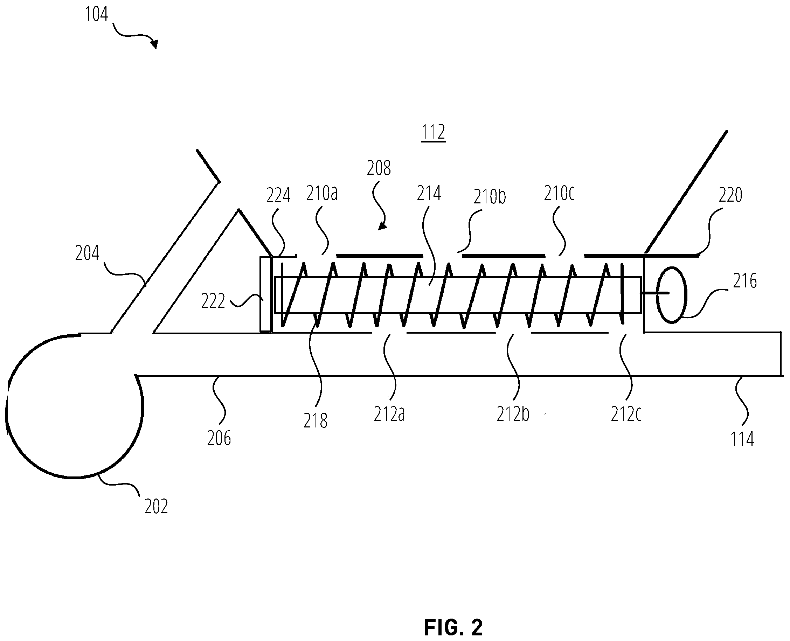

FIG. 2 illustrates a portion of the application system 104, including the solid material tank 112 and one of the flow lines 114. The other flow lines 114 may be connected to the solid material tank 112 in the same manner as the flow line 114 depicted in FIG. 2. The application system 104 includes a blower 202, which is in fluid communication with the solid material tank 112 via a first conduit 204 and with each of the flow lines 114 via second conduits 206 (e.g., one second conduit 206 per flow line 114). The blower 202 is configured to provide pressurized air to both the solid material tank 112 and the flow lines 114, to entrain solid material from the solid material tank 112 in air in each of the flow lines 114, and carry the solid material to the corresponding dispenser 116.

The solid material tank 112 may be sealed, such that air from the blower 202 provides pressure to the material in the solid material tank 112. Such pressure may help direct material to the flow lines 114 and prevent pressure in the flow lines 114 from pushing solid material back into the solid material tank 112. In other embodiments, the first conduit 204 may be omitted, and the solid material tank 112 may not be pressurized.

The application system 104 includes a housing 208 below the solid material tank 112 and connecting to flow lines 114. In some embodiments, the application system 104 may include one housing 208 connected to multiple of the flow lines 114. In other embodiments, each flow line 114 may have its own corresponding housing 208.

The housing 208 includes a sidewall 224 and metering screw 214 contained within the sidewall 209 for each flow line 114. The metering screw 214 is configured to rotate, and the sidewall 224 surrounds the metering screw 214. The sidewall 224 defines a solid inlet 210a connected to the solid material tank 112 and a solid outlet 212a connected to the flow line 114. A motor 216 is configured to rotate the metering screw 214 such that solid material falling through the solid inlet 210a from the solid material tank 112 into the housing 208 (i.e., toward the metering screw 214) is transferred axially along the metering screw 214 to the solid outlet 212a, where it falls out of the housing 208 (i.e., away from the metering screw 214).

The motor 216 may be a variable-speed electric drive, and may be configured to rotate the metering screw 214 at a variable rate (i.e., rotational velocity). Variable speed may be used to enable variable-rate application with precise control. Furthermore, variable-rate application may be used on a row-by-row basis if the motors 216 can drive individual metering screws 214 independent of one another. In some embodiments, the motor 216 may be driven pneumatically or by any other selected power source. The motor 216 may be connected to the metering screw 214 by any selected coupling, such as belts, gears, direct-drive shafts, etc. In some embodiments, the motor 216 may be omitted, and the metering screw 214 may be controlled by the engine 110 of the application machine 102.

In some embodiments, the housing 208 may include more than one solid inlet 210a, 210b, 210c, and more than one solid outlet 212a, 212b, 212c for each individual flow line 114. Each solid outlet 212a, 212b, 212c is axially offset from its corresponding solid inlet 210a, 210b, 210c so that solid material cannot fall directly through the housing 208 without moving axially along the metering screw 214. This ensures that the metering screw 214 is the driver of solid material flow through the housing 208. Because the solid material falls from the housing 208 through the sidewall 224, the number and configuration of the solid outlets 212a, 212b, 212c can be selected to provide steady solid flow. On the contrary, an auger with which material is transferred axially out the end of a housing, which is common in the field of material handling, tends to have spikes and troughs in flow rate based on the position of the end of the flighting (*e.g.*, between two cycles at which the end of the flighting passes the lowest point, there is typically a high-flow point and a low-flow point, based on the way the flighting pushes material. One way to even out the flow is by spacing the solid outlets 212a, 212b, 212c such that the thread reaches each of the solid outlets 212a, 212b, 212c at different points around the sidewall 224.

The metering screw 214 includes threads 218 configured to move solid material axially along the metering screw 214 when the metering screw 214 rotates (in addition to moving the material around the axis of the metering screw 214). In the embodiment pictured in FIG. 2, the metering screw 214 moves solid material from the left side of the figure to the right as the metering screw 214 rotates; therefore, solid material flows from the solid inlet 210a to the solid outlet 212a, from the solid inlet 210b to the solid outlet 212b, and from the solid inlet 210c to the solid outlet 212c. It should be understood that the application system 104 may be arranged on the application machine 102 such that the solid material flows in any direction along the metering screw 214 (e.g., from front to back, longitudinally along the centerline 118 of the application machine 102, or from side to side, transverse to the centerline 118). The flow lines 114 may also include one or more bends to direct the solid material and air flow to the dispensers 116, which are each located at a selected position relative to the application machine 102.

The threads 218 may exhibit a thread depth of less than 40%, 30%, or even of the diameter of the metering screw 214. As used herein, the thread depth is defined as the outside diameter of the threads minus the inside diameter of the threads, divided by two:

$$Thread\ Depth\ =\ \frac{Thread\ OD - Thread\ ID}{2}\ .$$

The inside diameter of the threads is equal to the diameter of the metering screw 214. In contrast to typical flighting on solid material augers, this relatively shallow thread depth may prevent solid material from falling through the housing 208 without traveling along the metering screw 214. Furthermore, shallow thread depth may ensure solid material cannot flow without turning the metering screw 214. Thus, the metering screw 214 may be used to control the flow rate of the solid material. The sizes of the diameter, thread, and length of the metering screw 214 may be selected based on the design of the application system 104, the material characteristics, and expected flow rates. For example, the diameter of the metering screw 214 may be from about 0.5 cm to about 10 cm, the thread depth may be from about 0.1 cm to about 4 cm, and the length of the metering screw 214 may be from about 5 cm to about 600 cm.

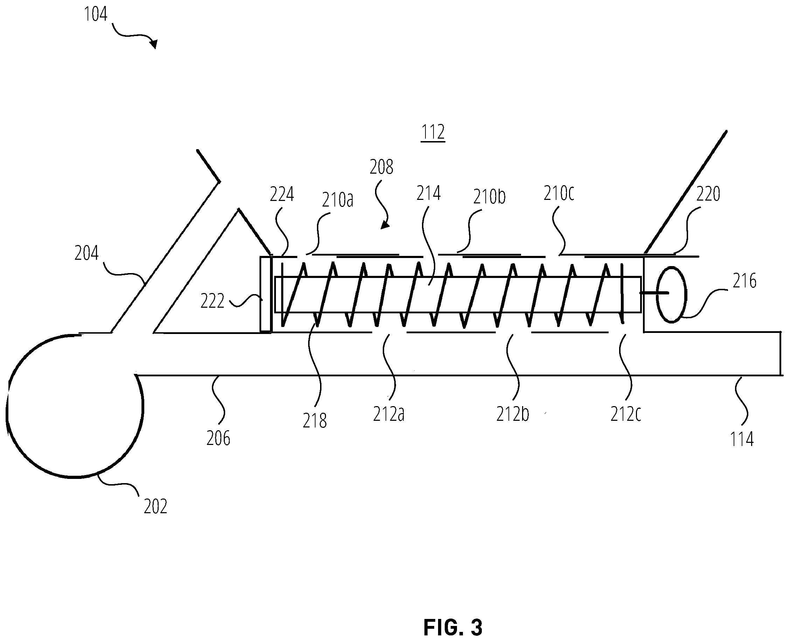

The application system 104 may include a slide gate 220 to control the number or size of the solid inlets 210a, 210b, 210c. For example, the slide gate 220 may include openings spaced such that all of the solid inlets 210a, 210b, 210c are either all closed, all partially open, or all completely open. For example, FIG. 3 illustrates a position of the slide gate 220 in which the solid inlets 210a, 210b, 210c are all partially open. In other embodiments, the openings of the slide gate 220 may be sized and spaced so that the first solid inlet 210a opens fully before the second solid inlet 210b opens, and so that the second solid inlet 210b opens fully before the third solid inlet 210c opens. The position of the slide gate 220 may be used to at least partially control the flow of solid material.

In some embodiments, the housing 208 may include an end cap 222 at one end of the metering screw 214. Upon removal of the end cap 222, the metering screw 214 may be easily removed from the housing 208 for cleaning or repair. For example, if the metering screw 214 becomes clogged, it may be removed, and solid material may be brushed, scraped, or otherwise removed from between the threads 218. In some embodiments, the slide gate 220 may be entirely closed before the metering screw 214 is removed to prevent to solid material from falling from the solid material tank 112.

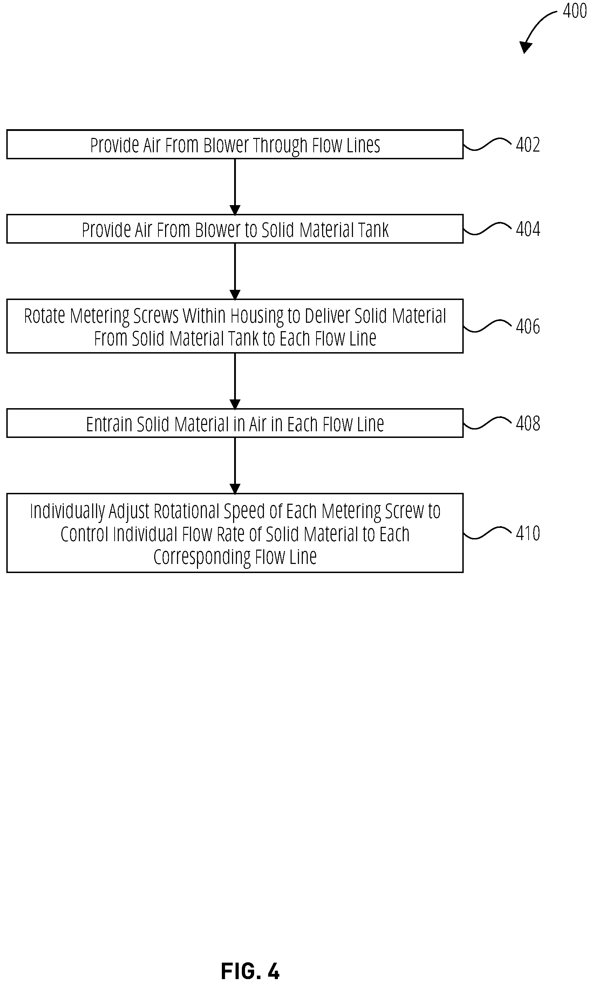

FIG. 4 is a simplified flow chart illustrating a method 400 of applying a solid material, such as with the application machine 102 shown in FIG. 1. In block 402, air is provided from a blower through each of a plurality of flow lines. In block 404, air is optionally provided from the blower to a solid material tank.

In block 406, a plurality of metering screws are each rotated within at least one housing (the same housing, or multiple housings) to deliver solid material from the solid material tank to each of the flow lines. The at least one housing has a solid inlet connected to the solid material tank and a solid outlet axially offset from the solid inlet and connected to at least one of the flow lines, as depicted, for example, in FIG. 2.

In block 408, the solid material is entrained in the air in each of the plurality of flow lines.

In block 410, the rotational speed of each of the metering screws is individually adjusted to control an individual flow rate of the solid material to each corresponding flow line. The individual rate control can be used, for example, to ensure that areas of a field are not overtreated when part of a boom of the application machine overlaps a portion of a field already treated. As another example, individual rate control may be used to avoid applying solid fertilizer to areas that are not planted. In either case, certain dispensers may be disabled entirely by stopping rotation of the metering screws associated with those dispensers. The individual flow rate control may also be useful for turn compensation (i.e., decreasing material flow at the inside of the turn and/or increasing material flow at the outside of the term) to promote even application of material per unit area across a field. In some embodiments, the individual rate control may be used to apply a different amount of solid material (referred to in the art as a "prescription") to different parts of a field (e.g., based on soil conditions, topography, etc.).

All references cited herein are incorporated herein in their entireties. If there is a conflict between definitions herein and in an incorporated reference, the definition herein shall control.

**Claims**

1. A solid material application system comprising:

   a solid material tank;
   a plurality of metering screws below the solid material tank, each metering screw contained in a housing having a sidewall around an axis of rotation of the metering screw, the housing having a solid inlet connected to the solid material tank through the sidewall, and a solid outlet through the sidewall and axially offset from the solid inlet;
   a plurality of flow lines, each flow line connected to the solid outlet of the housing containing one of the metering screws; and
   a blower in fluid communication with each of the flow lines;
   wherein each metering screw is configured to rotate such that solid material falling through the solid inlet from the solid material tank into the housing is transferred axially along the metering screw to the solid outlet; and
   wherein the blower is configured to entrain the solid material in air in each of the plurality of flow lines.

2. The application system of claim 1, further comprising a motor configured to rotate the metering screw at a variable rate.

3. The application system of claim 1 or 2, further comprising a slide gate configured to control a size of the solid inlet.

4. The application system of any one of claims 1 to 3, wherein the housing comprises an end cap at one end of each metering screw, wherein each metering screw is removable from the housing when the end cap is removed.

5. The application system of any one of claims 1 to 4, wherein the solid inlet comprises a plurality of solid inlets on an individual flow line, and wherein the solid outlet comprises a plurality of solid outlets on the individual flow line, each solid outlet axially offset from a corresponding solid inlet.

6. The application system of claim 5, wherein each metering screw is configured to rotate such that solid material falling through each solid inlet from the solid material tank into the housing is transferred axially along the metering screw to the corresponding solid outlet.

7. The application system of any one of claims 1 to 6, wherein the blower is in fluid communication with the solid material tank.

8. The application system of claim 7, wherein the blower is further configured to pressurize air in the solid material tank.

9. The application system of any one of claims 1 to 8, wherein each metering screw exhibits a diameter, and wherein each metering screw has threads exhibiting a thread depth of less than 40% of the diameter, preferably less than 30% of the diameter, and more preferably less than 20% of the diameter.

10. An application machine comprising:

    a chassis supported by ground-engaging elements; and
    the application system of any one of claims 1 to 9 carried by the chassis.

11. The application machine of claim 10, wherein each of the flow lines terminates at a different transverse position relative to a centerline of the chassis.

12. A method of applying a solid material using the application system of any one of claims 1 to 9, the method comprising:

    providing air from the blower through at least some of the plurality of flow lines;
    rotating at least some of the plurality of metering screws; and
    entraining the solid material in the air in at least some of the plurality of flow lines.

13. The method of claim 12, further comprising providing air from the blower to the solid material tank.

14. The method of claim 12 or 13, wherein rotating at least some of a plurality of metering screws comprises transferring the solid material axially along the metering screw from the solid inlet to the solid outlet.

15. The method of any one of claims 12 to 14, further comprising individually adjusting a rotational speed of at least some of the metering screws to control an individual flow rate of the solid material to each corresponding flow line.

**FIG. 1**

FIG. 2

FIG. 3

400

Provide Air From Blower Through Flow Lines — 402

↓

Provide Air From Blower to Solid Material Tank — 404

↓

Rotate Metering Screws Within Housing to Deliver Solid Material From Solid Material Tank to Each Flow Line — 406

↓

Entrain Solid Material in Air in Each Flow Line — 408

↓

Individually Adjust Rotational Speed of Each Metering Screw to Control Individual Flow Rate of Solid Material to Each Corresponding Flow Line — 410

**FIG. 4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 003359 A1 (HORSCH LEEB APPLICATION SYSTEMS GMBH [DE]) 9 December 2021 (2021-12-09) | 1-15 | INV. A01C7/08 A01C7/16 |
| Y | * figures 1A-3C * * paragraph [0079] * * paragraph [0087] * * paragraph [0091] - paragraph [0093] * * paragraph [0104] * * paragraph [0108] - paragraph [0110] * * paragraph [0112] - paragraph [0113] * * paragraph [0116] - paragraph [0117] * ----- | 3,5,6,9 | A01C15/04  ADD. A01C7/10 |
| Y | WO 2015/055996 A1 (SUMO UK LTD [GB]) 23 April 2015 (2015-04-23) | 3 | |
| A | * figures 1-6 * * page 1, line 13 - page 2, line 23 * * page 12, line 15 - page 13, line 4 * * page 18, lines 5-23 * ----- | 1,4,9, 12,14 | |
| Y | US 2 684 785 A (WALDORF SAMUEL E ET AL) 27 July 1954 (1954-07-27) | 5,6 | |
| A | * figures 2,3,4,6,7 * * column 3, lines 50-61 * * column 5, lines 52-65 * ----- | 1,12 | TECHNICAL FIELDS SEARCHED (IPC)  A01C |
| Y | US 2 522 693 A (STITELER WILLIAM H) 19 September 1950 (1950-09-19) | 5,6 | |
| A | * figures 1-6 * * column 2, lines 26-41 * * column 3, lines 7-12 * * column 3, line 39 - column 4, line 24 * ----- | 1,12 | |
| Y | WO 82/02143 A1 (GASON PTY LTD A F [AU]; WOODWARD JOHN WILLIAM [AU] ET AL.) 8 July 1982 (1982-07-08) | 9 | |
| A | * figures 1-3 * * page 1, line 24 - page 2, line 13 * * page 4, line 36 - page 5, line 24 * ----- -/-- | 1,12 | |

The present search report has been drawn up for all claims

| Place of search | Date of completion of the search | Examiner |
|---|---|---|
| The Hague | 7 November 2025 | Reininghaus, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 17 9330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/403970 A1 (PLATTNER CHAD E [US]) 21 December 2023 (2023-12-21)<br><br>* figures 1-3 *<br>* paragraph [0055] *<br>* paragraph [0057] - paragraph [0058] *<br>* paragraph [0208] *<br>* paragraph [0270] *<br>----- | 1-4, 10-12, 14,15 | |
| A | US 2011/179984 A1 (BEAUJOT PATRICK M [CA] ET AL) 28 July 2011 (2011-07-28)<br><br>* figures 1-11 *<br>* paragraph [0042] *<br>* paragraph [0046] - paragraph [0048] *<br>* paragraph [0056] - paragraph [0058] *<br>----- | 1,2, 10-12, 14,15 | |
| A | US 2022/183221 A1 (MONTAG ROGER A [US] ET AL) 16 June 2022 (2022-06-16)<br>* figures 1-13 *<br>* paragraph [0036] *<br>* paragraph [0039] - paragraph [0040] *<br>----- | 1-3,7,8 | TECHNICAL FIELDS SEARCHED (IPC) |

The present search report has been drawn up for all claims

| Place of search | Date of completion of the search | Examiner |
|---|---|---|
| The Hague | 7 November 2025 | Reininghaus, F |

EPO FORM 1503 03.82 (P04C01)

page 2 of 2

## ANNEX TO THE EUROPEAN SEARCH REPORT
## ON EUROPEAN PATENT APPLICATION NO.

EP 25 17 9330

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| DE 102020003359 A1 | 09-12-2021 | NONE | |
| WO 2015055996 A1 | 23-04-2015 | EP 3057403 A1 | 24-08-2016 |
| | | WO 2015055996 A1 | 23-04-2015 |
| US 2684785 A | 27-07-1954 | NONE | |
| US 2522693 A | 19-09-1950 | NONE | |
| WO 8202143 A1 | 08-07-1982 | EP 0067831 A1 | 29-12-1982 |
| | | WO 8202143 A1 | 08-07-1982 |
| | | ZA 818841 B | 29-12-1982 |
| US 2023403970 A1 | 21-12-2023 | AU 2021399231 A1 | 06-07-2023 |
| | | AU 2021400078 A1 | 06-07-2023 |
| | | AU 2021402245 A1 | 06-07-2023 |
| | | AU 2021403744 A1 | 06-07-2023 |
| | | AU 2021403745 A1 | 06-07-2023 |
| | | CA 3195072 A1 | 05-05-2022 |
| | | CA 3195564 A1 | 23-06-2022 |
| | | CA 3195565 A1 | 23-06-2022 |
| | | CA 3195566 A1 | 23-06-2022 |
| | | CA 3195567 A1 | 23-06-2022 |
| | | CN 116367709 A | 30-06-2023 |
| | | CN 116367710 A | 30-06-2023 |
| | | CN 116437799 A | 14-07-2023 |
| | | EP 4262343 A1 | 25-10-2023 |
| | | EP 4262344 A1 | 25-10-2023 |
| | | EP 4262345 A1 | 25-10-2023 |
| | | EP 4262346 A1 | 25-10-2023 |
| | | EP 4262347 A1 | 25-10-2023 |
| | | US 2023380335 A1 | 30-11-2023 |
| | | US 2023380336 A1 | 30-11-2023 |
| | | US 2023384143 A1 | 30-11-2023 |
| | | US 2023403970 A1 | 21-12-2023 |
| | | US 2023413722 A1 | 28-12-2023 |
| | | WO 2022130057 A1 | 23-06-2022 |
| | | WO 2022130058 A1 | 23-06-2022 |
| | | WO 2022130059 A1 | 23-06-2022 |
| | | WO 2022130060 A1 | 23-06-2022 |
| | | WO 2022130061 A1 | 23-06-2022 |
| US 2011179984 A1 | 28-07-2011 | AU 2011200297 A1 | 11-08-2011 |
| | | CA 2729700 A1 | 28-07-2011 |
| | | CA 2984836 A1 | 28-07-2011 |
| | | EP 2353355 A1 | 10-08-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 17 9330

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | | Publication date |
|---|---|---|---|---|
| | | US | 2011179984 A1 | 28-07-2011 |
| US 2022183221 A1 | 16-06-2022 | AR | 099143 A1 | 29-06-2016 |
| | | AU | 2015378668 A1 | 07-09-2017 |
| | | BR | 112017015333 A2 | 09-01-2018 |
| | | CA | 2973349 A1 | 28-07-2016 |
| | | EP | 3247191 A1 | 29-11-2017 |
| | | EP | 4645025 A2 | 05-11-2025 |
| | | NZ | 734736 A | 29-10-2021 |
| | | NZ | 760694 A | 29-10-2021 |
| | | US | 2016205867 A1 | 21-07-2016 |
| | | US | 2017280619 A1 | 05-10-2017 |
| | | US | 2019327883 A1 | 31-10-2019 |
| | | US | 2022183221 A1 | 16-06-2022 |
| | | US | 2024423120 A1 | 26-12-2024 |
| | | WO | 2016118116 A1 | 28-07-2016 |

EPO FORM P0459

For more details about this annex : see Official Journal of the European Patent Office, No. 12/82

page 2 of 2

**EP 4 736 615 A1**

**Patent documents cited in the description**

- CA 2291321